# EUROPEAN PATENT SPECIFICATION

(11) **EP 1 018 443 B1**
(45) Date of publication and mention of the grant of the patent: **10.11.2004**
(21) Application number: 99125977.1
(22) Date of filing: 28.12.1999
(51) Int. Cl.: B60B 21/06, B60B 21/08

(54) **Wheel rim for bicycles**
Radfelge für Fahrräder
Jante pour bicyclettes

(30) Priority: 05.01.1999 US 225406
(43) Date of publication of application: 12.07.2000
(73) Proprietor: Jaanluen Industry Co., Ltd., Hua Tan Hsiang, Changhua Hsien (TW)
(72) Inventor: Chern, Lai Jiann, Changhua Hsien (TW)
(74) Representative: Patentanwälte Hauck, Graalfs, Wehnert, Döring, Siemons, Schildberg

(56) References cited:
- DE-C- 822 499
- FR-A- 1 031 239
- US-A- 3 433 327

## Description

The invention relates to a wheel rim for bicycles.

Typical wheel rims for bicycles comprise two sides of smooth outer surfaces for engaging with the brake pads which may slip relative to the wheel rim when riding in the raining days and may not effectively engage with the wheel 1 rim for braking the bicycles

The wheel rim disclosed in US 3,433,327 has a series of parallel grooves cut into the sides. These grooves may be undulating, so that the angle between the grooves and the radius of the wheel is always above a certain value.

The invention is to provide a wheel rim for a bicycle including a brake facilitating mechanism for facilitating the braking operation of the bicycle.
FIG. 1 is a perspective view of a wheel rim;
FIG. 2 is a perspective view showing two sections of the wheel rim;
FIG. 3 is a cross sectional view taken along lines 3-3 of FIG. 1, showing the operation of the wheel rim;
FIG. 4 is an enlarged partial cross sectional view of the wheel rim;
FIG. 5 is a cross sectional view similar to FIG. 3, showing the other application of the wheel rim; and
FIG. 6 is an enlarged partial cross sectional view of the wheel rim as shown in FIG. 5.

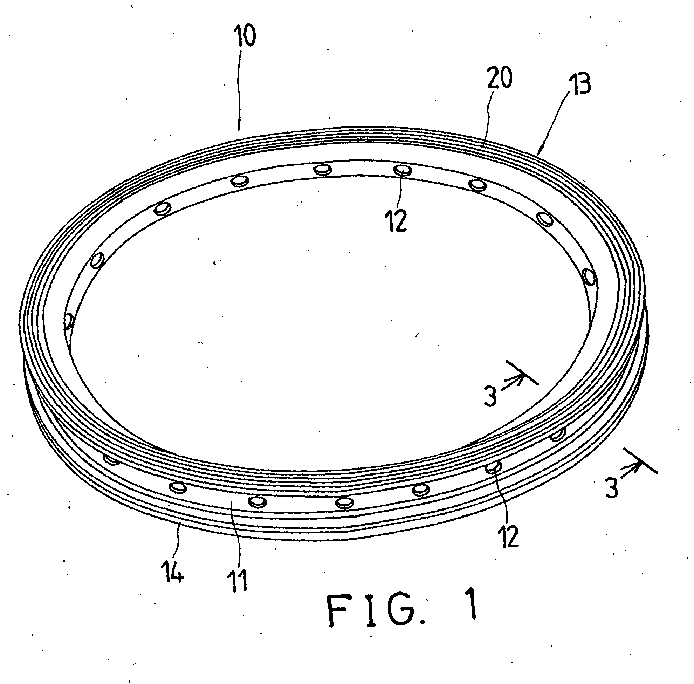

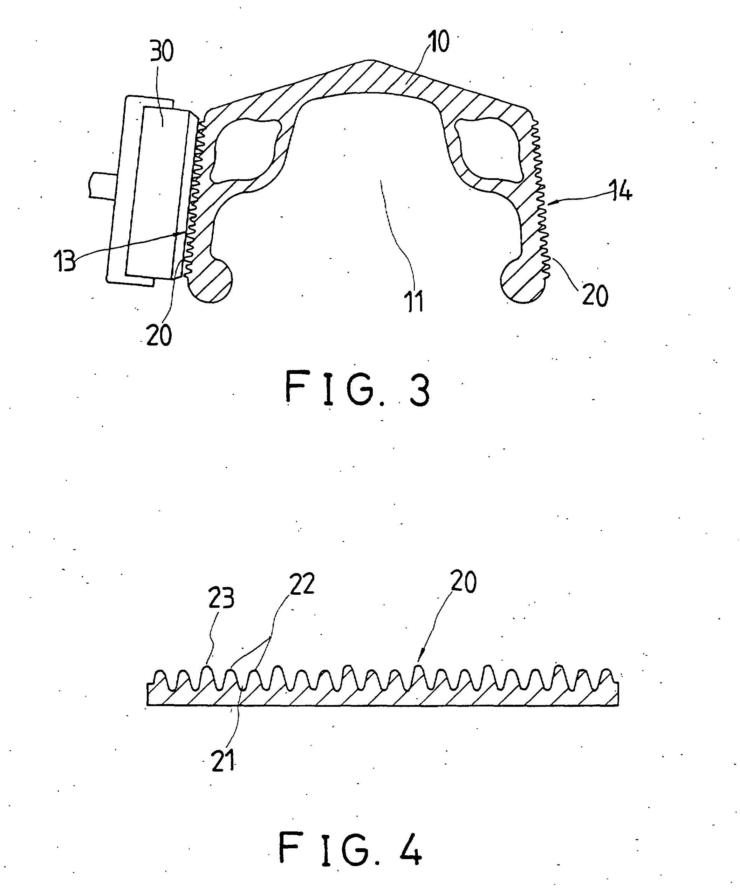

Referring to FIGS. 1-4, a wheel rim comprises a rim body 10 having an annular slot 11 defined between two peripheral sides 13, 14 and having a number of holes 12 for receiving the spokes of the bicycle wheel. The sides 13, 14 of the rim body 10 each includes a coarse or wavy outer surface 20 having a number of concentric grooves 21 defined between a number of concentric ribs 22. The ribs 22 of the outer surfaces 20 are provided for engaging with the brake pad 30 of the bicycle brake device. The grooves 21 are provided for receiving the dirts and the water from the pad 30 and for allowing the dirts and the water to be disengaged from the pad 30.

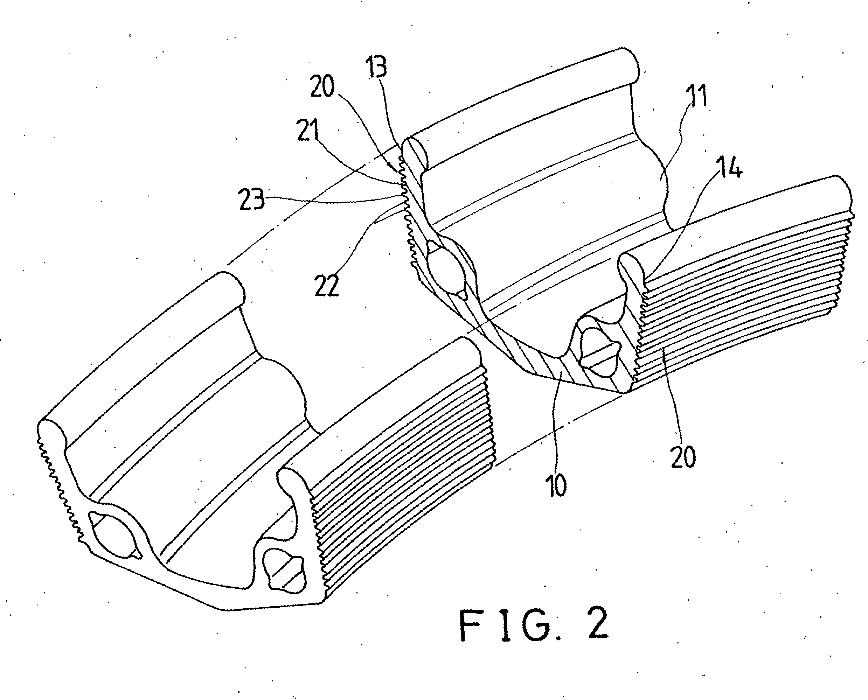

The outer surfaces 20 of the rim body 10 each includes two or more concentric ribs or bulges 23 having a height greater than that of the ribs 22 (FIGS. 2-4). Or, several of the bulges 23 have a height greater than that of the other ribs 22 and are arranged alternatively with the ribs 22. For example, two ribs 22 of less height are provided between two bulges 23 of greater height. The bulges 23 are provided for engaging with the pad 30 and for facilitating the disengagement of the dirts and the water from the pad 30 and for facilitating the braking operation of the bicycle.

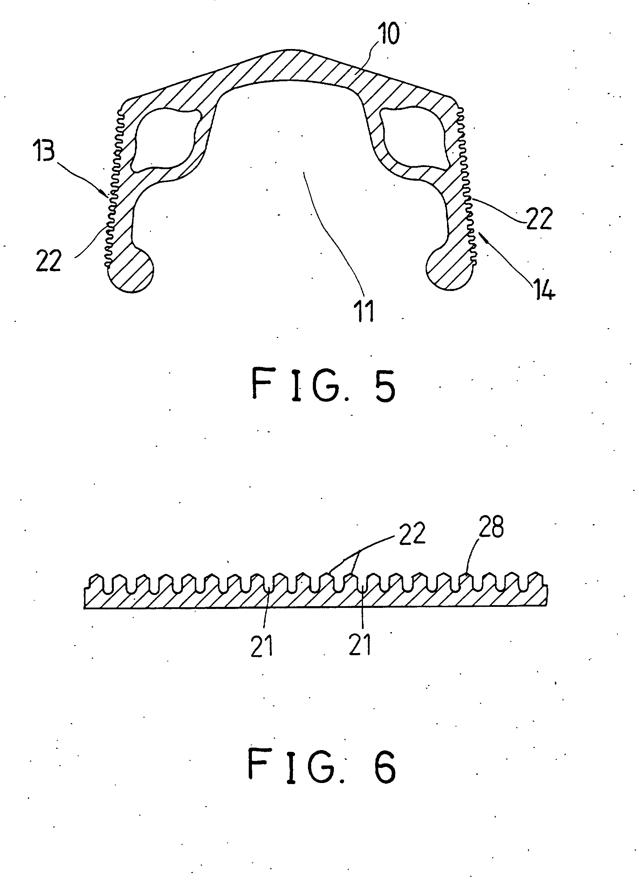

The ribs 22 and/or the bulges 23 may include a tooth-shape having a cusp 28 formed on the free end portion (FIGS. 5 and 6) for further facilitating the braking operation with the brake pad 30.

The wheel rim or the rim body 10 may be formed by extruding operations with aluminum materials, such that the ribs 22 and/or the bulges 23 may be easily formed during the formation of the wheel rim, without any further additional machining operations.

## Claims

1. A wheel rim for a bicycle comprising:
a rim body (10) including an annular slot (11) defined between two peripheral sides (13, 14) each including an outer surface,
wherein the outer surfaces (20) of the peripheral sides (13,14) of the rim body (10) are formed by a plurality of concentric grooves (21) recessed in the peripheral side (13, 14) **characterised in that** it futher comprises a plurality of concentric ribs protruding from the peripheral side (13, 14) for engaging with a brake pad (30).

2. The wheel rim according to claim 1, wherein said outer surfaces (20) of said rim body (10) each includes a wavy shape.

3. The wheel rim according to claim 1, wherein said ribs (22) are tooth-shaped.

4. The wheel rim according to claim 1, wherein said rim body (10) includes at least two concentric bulges (23) formed on said outer surfaces (20) thereof and formed between said ribs (22) and having a height greater than that of said concentric ribs for engaging with the brake pad (30).

## Patentansprüche

1. Radfelge für ein Fahrrad, mit:
einem Felgenkörper (10) mit einem ringförmigen Schlitz (11), der zwischen zwei Umfangsseiten (13, 14) definiert ist, die jeweils eine Außenfläche haben,
wobei die Außenflächen (20) der Umfangsseiten (13, 14) des Felgenkörpers (10) von mehreren konzentrischen Nuten (21) gebildet werden, die in der Umfangsseite (13, 14) ausgespart sind,
**dadurch gekennzeichnet, dass** sie ferner mehrere konzentrische Rippen aufweist, die von der Umfangsseite (13, 14) vorstehen, um an einem Bremsbacken (30) anzugreifen.

2. Radfelge nach Anspruch 1, bei der die Außenflächen (20) des Felgenkörpers (10) jeweils eine wellige Form haben.

3. Radfelge nach Anspruch 1, bei der die Rippen (22) zahnförmig sind.

4. Radfelge nach Anspruch 1, bei der der Felgenkörper (10) mindestens zwei konzentrische Wulste (23) hat, die an seinen Außenflächen und zwischen den Rippen (22) gebildet sind und eine Höhe haben, die größer ist als diejenige der konzentrischen Rippen zum Angreifen an dem Bremsbacken (30).

## Revendications

1. Jante pour une bicyclette comprenant :
un corps de jante (10) comprenant une fente annulaire (11) définie entre deux côtés périphériques (13, 14), chacun comprenant une surface externe, dans laquelle les surfaces externes (20) des côtés périphériques (13, 14) du corps de jante (10) sont formées avec une pluralité de rainures concentriques (21) enfoncées dans le côté périphérique (13, 14), **caractérisée en ce qu'**elle comprend en outre une pluralité de nervures concentriques faisant saillie à partir du côté périphérique (13, 14) pour se mettre en prise avec une plaquette de frein (30).

2. Jante selon la revendication 1, dans laquelle lesdites surfaces externes (20) dudit corps de jante (10) comprennent chacune une forme ondulée.

3. Jante selon la revendication 1, dans laquelle lesdites nervures (22) sont en forme de dent.

4. Jante selon la revendication 1, dans laquelle ledit corps de jante (10) comprend au moins deux renflements concentriques (23) formés sur lesdites surfaces externes (20) de celui-ci et formés entre lesdites nervures (22) et ayant une hauteur supérieure à celle desdites nervures concentriques pour se mettre en prise avec la plaquette de frein (30).
